Europäisches Patentamt

European Patent Office

Office européen des brevets

(11) Veröffentlichungsnummer: **0 681 291 A2**

(12) **EUROPÄISCHE PATENTANMELDUNG**

(21) Anmeldenummer: **95106440.1**

(22) Anmeldetag: **28.04.95**

(51) Int. Cl.6: **G11B 20/10**, G11B 5/09, H04L 25/03

(30) Priorität: **05.05.94 DE 4415811**

(43) Veröffentlichungstag der Anmeldung:
**08.11.95 Patentblatt 95/45**

(84) Benannte Vertragsstaaten:
**DE ES FR GB IT**

(71) Anmelder: **DEUTSCHE THOMSON-BRANDT GMBH**
Hermann-Schwer-Strasse 3
D-78048 Villingen-Schwenningen (DE)

(72) Erfinder: **Mager, Klaus**
Schabelweg 23
D-78073 Bad Dürrheim (DE)
Erfinder: **Wursthorn, Edgar**
Friedrichstrasse 44
D-78073 Bad Dürrheim (DE)

(54) **Verfahren zum Entzerren von verzerrten Datensignalen.**

(57) 2.1. Zur Entzerrung verzerrter Datensignale werden lineare Filter eingesetzt. Die Entzerrung magnetisch aufgezeichneter Datensignale zum Beispiel auf einem Magnetband läßt sich mittels linearer Filter bei steigender Datendichte immer schwerer realisieren.

2.2 Um verzerrte Datensignale zu entzerren, ist ein neuronales Netzwerk vorgesehen. Das zu entzerrende Datensignal(DS) wird über Verzögerungsglieder (VZ1,...,VZ5) einer Gruppe von Netzwerken (NG1,...,NG5) zur Gewichtung zugeführt. Die Ausgänge der Netzwerke zur Gewichtung (NG1,...,NG5) sind mit den Eingängen mehrerer Neuronen (N1,...,N5) verbunden, deren Ausgänge über je einen Verstärker (V1,...,V5) mit den Eingängen eines weiteren Neurons (N6) verbunden sind, an dessen Ausgang das entzerrte Datensignal(DA) abnehmbar ist.

Fig. 3

EP 0 681 291 A2

Die Erfindung betrifft ein Verfahren zum Entzerren von verzerrten Datensignalen.

Es ist bekannt, verzerrte Datensignale mittels linearer Filter zu entzerren.

In der Figur 1 ist das auf einem Magnetband aufgezeichnete Datensignal gezeigt.

Figur 2 zeigt das vom Magnetband gelesene Wiedergabesignal.

Es ist deutlich zu erkennen, daß die Steilheit der Flanken stark verzerrt ist. Wie bereits erwähnt, sind zur Entzerrung von Datensignalen lineare Filter vorgesehen. Die Entzerrung magnetisch aufgezeichneter Datensignale läßt sich mittels linearer Filter jedoch bei steigenden Datendichten immer schwerer realisieren.

Es ist daher Aufgabe der Erfindung, die Entzerrung verzerrter Datensignale, insbesondere magnetisch aufgezeichneter Datensignale wesentlich zu verbessern.

Die Erfindung löst diese Aufgabe dadurch, daß ein neuronales Netzwerk zur Entzerrung verzerrter Datensignale vorgesehen ist.

Die Vorteile eines neuronalen Netzwerkes anstelle linearer Filter bei der Entzerrung verzerrter Datensignale wird am Beispiel eines magnetisch aufgezeichneten Datensignales nun erläutert.

Die Erfindung geht von der Erkenntnis aus, daß es sich bei einem Magnetbandkanal weniger um ein kausales Übertragungssystem, wie es für einen linearen Filterentwurf wünschenswert ist, sondern eher um ein akausales System handelt.

Die Aufnahme und spätere Wiedergabe von Daten stellt ein zweistufiges Verfahren dar. Bei der Aufnahme wird durch eine nicht punktförmige Magnetisierung und durch die Streufelder, die Wellenlängen der hohen Signalfrequenzen weit überschreiten können, nicht nur ein Effekt bei der gerade aktuellen Bandposition erzielt, sondern auch bei zeitlich zurückliegenden, d.h. bei bereits aufgezeichneten Ereignissen. Dies führt dazu, daß bei der Wiedergabe ein gerade aktuelles Ereignis von nachfolgenden "künftigen" Ereignissen beeinflußt wird, so daß im eigentlichen Sinn nicht mehr von einem kausalen Übertragungssystem die Rede sein kann. Die zeitliche Aufeinanderfolge von Ursache und Wirkung ist nicht mehr gegeben. In Figur 2 ist deutlich zu sehen, daß das Wiedergabesignal bereits deutlich ansteigt, bevor die im Aufzeichnungssignal zu sehende Flanke ansteigt. Der Einsatz von linearen Filtern in akausalen Systemen ist jedoch beschränkt und führt zu einer nicht befriedigenden Entzerrung verzerrter Datensignale. Oft ist der Einsatz von Allpässen, die nur schwer einstellbar sind, erforderlich.

Die Erfindung geht von dem Gedanken aus, das Wiedergabesignal als Ist-Wert und das digitale Aufzeichnungssignal als Sollwert zu betrachten. Das neuronale Netz führt keine Filterung durch, sondern vergleicht Signalmuster des Aufzeichnungssignales mit Signalmustern des Wiedergabesignales. Anstelle Signale mittels linearer Filter zu filtern, vergleicht die Erfindung Signalmuster.

Die Theorie der neuronalen Netze stützt sich auf Erkenntnisse, die in der biologischen und neurologischen Forschung aus Untersuchungen an Nervenfasern gewonnen wurden. Die Umsetzung dieser Erkenntnisse in die Technik geht in weiten Bereichen auf die Arbeiten von D.O. Hebb aus dem Jahre 1961 zurück. Es handelt sich im wesentlichen um die folgenden drei Merkmale:

Die Neuronen kommunizieren untereinander über sogenannte Synapsen, die als Schaltstellen anzusehen sind, über die ein Signal mit einer bestimmten Intensität zum Zentrum einer Zelle geleitet wird.

In der Zelle werden alle eingegangenen gewichteten Signale summiert und mit einer nicht linearen Aktivierungsfunktion beaufschlagt, um das Ausgangssignal des Neurons zu erzeugen, das wiederum über Synapsen an andere Neuronen weitergeleitet wird. Die wesentliche Eigenschaft der Nervenzellen im Gehirn ist ihre Lernfähigkeit. Es wird angenommen, daß der Lernvorgang durch Einstellen der Gewichtungen zwischen den Neuronen erfolgt.

Diese angeführten drei Eigenschaften eines biologischen neuronalen Netzes lassen sich auf digitale und analoge elektrische Schaltungen übertragen.

Es zeigen

Figur 1

ein auf einem Magnetband aufgezeichnetes Aufzeichnungssignal

Figur 2

ein Wiedergabesignal von einem Magnetband

Figur 3

ein Ausführungsbeispiel der Erfindung.

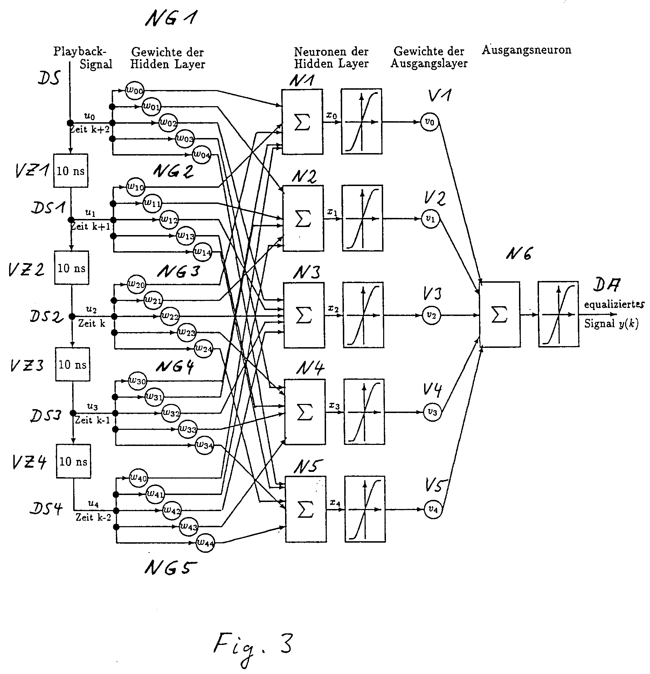

Anhand des in Figur 3 gezeigten Ausführungsbeispieles wird die Erfindung nun erläutert.

In der Figur 3 wird das zu entzerrende Datensignal DS, das zum Beispiel von einem Magnetband gelesen wird, einer Reihenschaltung aus vier Verzögerungsgliedern VZ1 bis VZ4 zugeführt. Das unverzögerte Datensignal DS wird den Eingängen eines ersten Netzwerkes zur Gewichtung mit den Gewichtungsfaktoren w00, w01, w02, w03 und w04 zugeführt. Ebenso wird das am Ausgang des ersten Verzögerungsgliedes abnehmbare verzögerte Datensignal DS1 einem zweiten Netzwerk zur Gewichtung mit den Gewichtungsfaktoren w10, w11, w12, w13 und w14 zugeführt. Das am Ausgang des zweiten Verzögerungsgliedes VZ2 gelieferte verzögerte Datensignal DS2 wird einem dritten Netzwerk zur Gewichtung mit den Gewichtungsfaktoren w20, w21, w22, w23 und w24 zugeführt. Ebenso wird das am Ausgang des dritten Verzögerungsgliedes VZ3 liegende verzögerte Datensignal DS3 einem Netzwerk zur Gewichtung mit den Gewichtungsfaktoren w30, w31, w31, w33 und w34 zugeführt. Schließlich wird noch das vom vierten Verzögerungsglied VZ4 gelieferte verzögerte Datensignal DS4 einem weiteren Netzwerk zur Gewichtung mit den Gewichtungsfaktoren w40, w41,w42, w43 und w44 zugeführt.

Der erste Ausgang eines jeden Netzwerkes zur Gewichtung ist mit je einem Eingang eines Neurons N1 bis N5 verbunden. Ebenso sind die restlichen Ausgänge der Netzwerke zur Gewichtung mit je einem Eingang eines der Neuronen N1 bis N5 verbunden. Der Ausgang eines jeden Neurons N1 bis N5 ist mit dem Eingang je eines Verstärkers V1 bis V5 verbunden. Die Verstärker V1 bis V5 dienen der Gewichtung der Ausgangssignale der Neuronen N1 bis N5. Die Ausgänge der Verstärker V1 bis V5 sind mit den Eingängen eines weiteren Neurons N6 verbunden, an dessen Ausgang das entzerrte Datensingal DA abnehmbar ist.

Ein Neuron ist aus einem Summierer und einer folgenden nicht linearen Aktivierungsfunktionseinheit aufgebaut.

Der Einsatz des neuronalen Netzes teilt sich nun in eine Lern- und eine Arbeitsphase auf. In der Lernphase werden die Gewichte einem Trainingsvorgang zur optimalen Musteridentifikation unterworfen. Sie sind dazu variabel einstellbar. Während der Arbeitsphase bleiben die Gewichte jedoch fest eingestellt.

Aufgabe des Trainingsalgorithmus ist es, schnell auf eine optimale Gewichtseinstellung zu konvertieren, ohne das Netzwerk in eine Sättigung oder ein nur lokales Minimum zu steuern. Ein bekannter Algorithmus ist zum Beispiel die Fehlerrückrechnung, häufig auch als error back propagation bezeichnet.

In einem ersten Schritt werden alle Gewichte $w_{ij}$ der Netzwerke zur Gewichtung und $v_j$ der Verstärker V1 bis Vn mit kleinen Werten zufällig initialisiert. Ein Eingangsvektor u kann nun jedem j-ten Neuron als eine gewichtete Summe $x_j$ zugeführt werden.

$$x_j = \sum_{i=0}^{4} w_{ij} * u_i \qquad\qquad (1)$$

beziehungsweise vektoriell für alle Neuronen der Hidden Layer mit $\vec{x}$ als Zustandsvektor und W als Gewichtsmatrix:

$$\vec{x} = \begin{pmatrix} x_0 \\ x_1 \\ x_2 \\ x_3 \\ x_4 \end{pmatrix} = \begin{pmatrix} w_{00} & w_{10} & w_{20} & w_{30} & w_{40} \\ w_{01} & w_{11} & w_{21} & w_{31} & w_{41} \\ w_{02} & w_{12} & w_{22} & w_{32} & w_{42} \\ w_{03} & w_{13} & w_{23} & w_{33} & w_{43} \\ w_{04} & w_{14} & w_{24} & w_{34} & w_{44} \end{pmatrix} * \begin{pmatrix} u_0 \\ u_1 \\ u_2 \\ u_3 \\ u_4 \end{pmatrix} = W * \vec{u} \qquad\qquad (2)$$

Als nächstes ist eine Funktion zur Aktivierung der Neuronen als nichtlineares Element der Signalübertragung festzulegen. Sie soll eine Art Schaltschwelle der biologischen Neuronen modellieren. Gemeinhin wird dazu die sogenannte Sigmoidalfunktion verwendet:

$$f(x) = \frac{1}{1 + e^{-\lambda * x}} \qquad\qquad (3)$$

Durch Wahl eines sehr großen $\lambda$ nähert die Sigmoidalfunktion eine Sprungfunktion an. Jetzt kann das gesamte Übertragungsverhalten des neuronalen Netzes formelmäßig erfaßt werden, wobei y die Ausgangsgröße und $\vec{v}$ der Vektor der Ausgangsgewichte ist:

3

$$y = f\left(\sum_{j=0}^{4} v_j * f(x_j)\right) = f\left(\sum_{j=0}^{4} v_j * f\left(\sum_{i=0}^{4} w_{ij} * u_i\right)\right) \tag{4}$$

$$y = f\left(\vec{v}^T * f(W * \vec{u})\right) \tag{5}$$

$$y = \frac{1}{1 + e^{-\lambda * \vec{v}^T * f(\vec{x})}} \tag{6}$$

$$y = \frac{1}{1 + e^{-\lambda * \vec{v}^T * \frac{1}{1 + e^{-\lambda * W * \vec{u}}}}} \tag{7}$$

Nun ist unmittelbar einzusehen, daß nach der zufälligen Initialisierung der Gewichte die Ausgangsgröße y bei Anlegen eines Eingangsmusters $\vec{u}$ von der Zielgröße z erheblich abweicht.

$$\text{Fehler} = z\text{-}y$$

Der berechnete Fehler läßt sich zur Verbesserung der Gewichtseinstellungen verwenden. Um eine Sättigung zu verhindern, wird dazu der Fehler mit einem Faktor bewichtet, der die Änderungsbereitschaft von y in Abhängikeit der Eingangssumme

$$\sum_{j=0}^{4} v_j * f(x_j)$$

des Ausgangsneurons ausdrückt. Mathematisch formuliert ist dieser Faktor die Ableitung der Aktivierungsfunktion aus Formel 3, die sich geschickt als $\dot{f} = \lambda^* f^*(1\text{-}f)$ ausdrücken läßt. Damit ergibt sich der rückkoppelbare Fehler zu:

$$\delta = \lambda^* y^* (1\text{-}y)^* (z\text{-}y) \tag{9}$$

Mithilfe des $\delta$ lassen sich die neuen $w_{ij}$ und $v_i$ berechnen, wenn noch eine Lernrate $\eta$ mit $0 < \eta < 1$, die die Stärke der Rückkopplung bestimmt, berücksichtigt wird (gezeigt für den $n + 1$. Iterationsschritt):

$$w_{ij}(n+1) = w_{ij}(n) + \eta * \underbrace{\lambda * f(x_j) * \left(1 - f(x_j)\right) * \delta * v_j}_{\text{Fehlerrückrechnung}} * u_i \tag{10}$$

$$v_j(n+1) = v_j(n) + \eta^* \delta^* f(x_j) \tag{11}$$

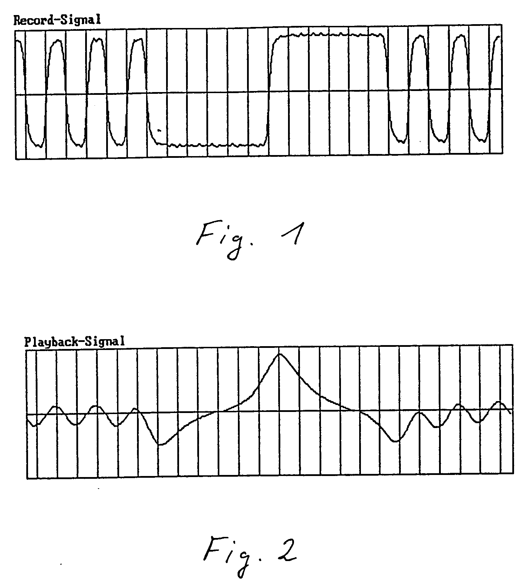

In der Trainingsphase wird das durch den Einsgangsvektor $\vec{u}$ gebildete Zeitfenster mehrmals über die gesamte Testsequenz aus Figur 1 geführt, wobei jedes Muster für sich öfters iteriert wird.

Eine umfangreiche und leicht verständliche Darstellung des Backpropagation-Algorithmus wird in Philip D. Wassermann, Neural Computing. Theory and practice, Van Nostrand Reinhold Book, 1989 gegeben.

Das Funktionieren eines neuronalen Netzes in dem ihm zugeteilten Aufgabenbereich hängt von vielen Einflußgrößen ab.

Ganz entscheidend ist die Art und Weise, wie die zu lernenden Muster dem Netz präsentiert und eintrainiert werden. Durch die Auswahl der Muster sollte ein signifikanter Querschnitt aus dem Systemverhalten abgedeckt sein. Auch Störeinflüsse aus der Praxis gehören dazu. Beim Training gilt es, durch geeignete Wahl der Lernrate $\eta$ und der Iterationszahl pro Muster das Netzwerk in ein globales Minimum einer Fehlerfunktion über dem vieldimensionalen Raum der Gewichte zu steuern.

Die Struktur des Netzwerks, d.h. aus wievielen Schichten und wievielen Neuronen pro Schicht es besteht, bestimmt die maximale Anzahl von Mustern, die gelernt und unterschieden werden können. Ein formaler Zusammenhang zwischen Struktur und Kapazität ist derzeit noch unbekannt. Anstelle von fünf

4

Eingangswerten, die im Abstand von 10 ns aufeinander folgen, sind auch mehr Werte in anderem zeitlichen Abstand denkbar.

Je nach Einsatzgebiet ist eine geeignete Aktivierungsfuntion zu wählen. In Christian M. Haffer, Worauf es beim Entwerfen neuronaler Netze ankommt, Elektronik 6, 1992, wird zum Beispiel für ein Netzwerk, das eine Fourier-Reihenentwicklung seines Eingangssignals vornehmen soll, eine sinusförmige Verarbeitungsfunktion vorgeschlagen. In der vorliegenden Anwendung scheint die Sigmoidalfuntion angebracht zu sein, wobei die Steigung des Übergangs ein weiterer wichtiger Parameter der Einflußnahme ist.

Für die Konvergenz des Netzwerks in der Lernphase und seiner Stetigkeit in der Arbeitsphase mag es von Bedeutung sein, ob die Zielgröße dem realen Record-Signal entspricht, d.h. eine endliche Flankensteilheit hat, oder ob ein ideales sprungförmiges Digitalsignal vorgegeben wird.

Nicht zuletzt spielt die Initialisierung der Gewichte mit kleinen zufälligen Werten eine Rolle, da sich bei gleichem Training ein anderer Endzustand einstellt, wenn sich zwei Zufallsfolgen bei der Initialisierung unterscheiden.

Beim Trainieren eines neuronalen Netzwerks stößt man auf Effekte, die auch bei biologischen Netzwerken bekannt sind, besonders wenn der zu lernende Stoff vielfältig und umfangreich ist. Wird ein bestimmtes Eingangsmuster mit zu vielen Iterationen gelernt, so "vergißt" das Netzwerk, was es bereits früher gelernt hat. Ist die Iterationszahl jedoch zu gering, findet nur oberflächliches Lernen statt, das durch Lernen von anderen Mustern wieder verdrängt wird. Hier gilt es, aus der Simulationserfahrung mit dem neuronalen Netz eine vorteilhafte Trainingsmethode abzuleiten, um die vorhandene Netzwerk-Kapazität optimal auszunutzen. Eine mögliche Strategie wird durch die folgenden vier Schritte beschrieben:

1. Zufällige Initialisierung der Gewichte mit kleinen Werten.

2. Lernvorgang mit geringer Iterationszahl und hoher Lernrate. Dabei lernt das Netz die Dynamik des vorliegenden Prozessors, ohne sich auf ein bestimmtes Muster einzuschießen.

3. Präzisionsdurchlauf mit hoher Iterationszahl bei kleinerer Lernrate. Jedes Muster hat die Chance, bei der Gestaltung der Gewichte eine Nische für sich zu erwischen.

4. Globalbetrachtung ähnlich wie 2. Schritt mit geringer Iterationszahl, jedoch sehr kleiner Lernrate, um ein Feintuning zu ermöglichen.

Bei den letzten drei Schritten werden alle vorhandenen Muster, also die komplette Testdatensequenz, hintereinander abgehandelt. Um die Sensitivität des Netzwerks gegen Rauschen zu verringern, kann man die Anzahl von Durchläufen der Datensequenz dahingehend erweitern, daß mit und ohne hinzuaddiertes Rauschen gelernt wird. In vielen Trainingsläufen werden die Gewichte auf dem PC optimiert und stehen schließlich für die Einstellung einer Hardware zur Verfügung.

Der erfolgreiche Einsatz und die Akzeptanz eines neuronalen Netzes scheitern oft daran, daß über die Vorgänge im Netzwerk keine Klarheit herrscht. Durch die Betrachtung der Summenpunkte der Neuronen vor der Aktivierungsfunktion kann die Transparenz des Netzwerks erhöht werden.

Nähert sich zum Beispiel bei einer Folge von sechs High-Bits das Signal am Summenpunkt des Ausgangsneurons zu sehr der Nullinie, so ist zu erwarten, daß ein überlagertes Rauschen an dieser Stelle eine Fehlentscheidung hervorruft.

Durch Hinzuaddieren eines Rauschsignals - weißes Rauschen mit einem Rauschabstandvon - 20dB aus dem Zufallsgenerator des PC - kann der Rauschabstand des Netzwerks wesentlich verbessert werden, weil die Fehlentscheidungen dann schon in der Lernphase anfallen und entsprechend kompensiert werden können.

Jeder der fünf Summenpunkte der internen Schicht stellt den Ausgang eines FIR-Filters dar.Durch die zufällige Initialisierung der Gewichte und den anschließenden Lernvorgang entstehen somit fünf FIR-Filter mit unterschiedlichem Übertragungsverhalten. Die Gewichte $v_j$ der Ausgangsschicht stellen eine Bewertung der fünf Filter dar, nachdem diese durch die Aktivierungsfunktion entschieden wurden. Schließlich entspricht die Aktivierungsfunktion des Ausgangsneurons dem Entscheider, der auch nach jedem konventionellen Entzerrer zur Detektion verwendent wird.

Der Aufbau des Netzwerks in analoger Schaltungstechnik ist eine einfache Lösung zur Umsetzung der Erfindung, nicht zuletzt im Hinblick auf die gerforderte hohe Verarbeitungsgeschwindigkeit. Mit Potentiometern lassen sich die Gewichtungen einstellen, und die Summation der gewichteten Signale erfolgt an einem als Summierer beschalteten Operationsverstärker. Um auch negative Gewichte zu ermöglichen, kann ein Signal an einem entweder in Emitter- oder in Kollektorschaltung betriebenen Transistor abgegeriffen werden. Beschränkt man sich auf sprungförmige Aktivierungsfunktionen, so wird dieses Verhalten durch den Einsatz von Komparatoren abgebildet. Schwierig zu realisieren ist eine sigmoidale Aktivierungsfunktion, jedoch könnte sie sowohl beim Training wie auch in der Praxis vorteilhaft sein.

In einem analogen Schaltungsaufbau können die Signale in parallelen Ästen geführt und gleichzeitig abgearbeitet werden. Dies ist auch in biologischen Netzwerken der Fall. Rechengeschwindigkeit und mögliche Signalbandbreite sind deshalb sehr hoch.

Wie die Meßergebnisse einer sehr einfachen Schaltung zeigen, stellt der Einsatz eines neuronalen Netzes zur Detektion von verzerrten Digitalsignalen eine interessante und erfolgversprechende Alternative zur Verwendung von linearen Entzerrer-Bausteinen dar. Im Gegensatz zu diesen liegt eine vollständige Rekonstruktion der ursprünglichen Digitaldaten im Bereich des Möglichen. Sehr steile Flanken, d.h. hohe Frequenzen, werden exakt zurückgewonnen, und Einbrüche bei tieffrequenten Folgen, eine der Schwachstellen linearer Entzerrung, treten nicht auf.

- Es ist vorteilhaft, die Gewichte in der Hardware direkt vom PC aus zu programmieren, weil die Einstellung der Potentiometer von Hand zu mühsam und ungenau ist. Leider haben auf dem Markt erhältliche digital setzbare Potentiometer eine zu geringe Übertragungsbandbreite (< 1MHz).
- Viele Störeinflüsse können durch differentielle Signalführung eliminiert werden, wie es in der HF-Technik üblich ist.
- Die Realisierung der Aktivierungsfunktion mit Komparatoren stellt sicher nicht die beste Lösung dar. Zum einen stören die steilen Flanken des Entscheiders durch Übersprechen die anderen Signale, zum anderen ist ein sanfter Übergang der Aktivierung wünschenswert.
- Das Übersprechen zwischen den Signalleitungen kann jedoch durch Anspassung der Signalpegel aneinander reduziert werden.

Beim Trainieren eines neuronalen Netzes ist die lange Dauer des Lernvorgangs mangels schneller Konvergenz lästig. Die erreichte Einstellung ist noch nicht die optimale.

Ein Ansatzpunkt, hier Abhilfe zu schaffen, ist die Lernrate $\eta$. Sie könnte in Abhängigkeit der Netzstruktur und dem gerade berechneten Fehler gewählt werden, so daß der Fehler für das aktuelle Muster bereits nach der zweiten Iteration sehr klein wird. Eine solche Lernratensteuerung würde dem Dead Beat Entwurf aus der Regelungstechnik nahe kommen. Dadurch ist eine schnellere Konvergenz möglich, denn nach Ermittlung und Rückkopplung des Fehlers würde vermieden, daß das Netz etwa durch ein zu großes $\eta$ überschwingt und einen Fehler entgegengesetzten Vorzeichens produziert. Wie hoch die Gefahr ist, eher in ein lokales Minimum hineinzulaufen, ist nicht bekannt.

Die zufällige Initialisierung der Gewichte stellt bestimmt nicht die optimale Wahl der Ausgangsbedingungen für ein zu trainierendes Netzwerk dar. Will man die Gewichtsvektoren möglichst verschieden anlaufen lassen, so könnten sie zum Beispiel dem Schmidtschen Orthogonalisierungsverfahren unterworfen und normiert werden. Eine weitere Möglichkeit besteht im gezielten Einbringen von Systemcharakteristika als Startwerte der Gewichte. So ist es denkbar, jeden Gewichtsvektor auf eine spezielle Frequenz innerhalb des möglichen Signalbereichs hin zu initialisieren, indem er mit Hilfe der Pseudoinversen einer Zeitreihe, die nur aus der jeweiligen Frequenz besteht, wie ein FIR-Filter berechnet wird.

Aus der erwähnten Fähigkeit zur Selbstorganisation in Äste bevorzugter Frequenzen könnte eine Adaptionsmöglichkeit des Netzes in der Arbeitsphase abgeleitet werden. Je nach den Gegebenheiten eines Magnetbandkanals ließen sich die Ausgangsgewichte $v_i$ und damit die Frequenzgewichtung einstellen.

Neben der Entzerrung mittels eines durch Backpropagation trainierten Netzwerkes gibt es eine andere Möglichkeit des Einsatzes neuronaler Netze.

Im Kanalcode des digitalen Magnetbandsystems existieren eine beschränkte Anzahl von Codewörtern, zum Beispiel mit jeweils 10 Bits, die wiederum aus einer nur begrenzten Zahl von zulässigen Lauflängen, zum Beispiel zwischen 1 und 6 Bits, bestehen. Es ist nun denkbar, ein Netzwerk in Form eines assoziativen Speichers aufzubauen, dessen Eingangsgewichtsvektoren binär aus den Codewörtern des Kanals bestehen. Nach einer eventuellen Vorfilterung des Wiedergabe-Signals muß zunächst der Anfang eines Codewortes gefunden werden. Wird dieses dann auf den assoziativen Speicher gegeben, so ist zu erwarten, daß es mit demjenigen Gewichtsvektor am besten korreliet, der das ursprüngliche digitale Codewort darstellt. Die beste Korrelation wird durch das größte Skalarprodukt angegeben, das der Eingangsvektor mit einem der Gewichtsvektoren erzielt. Im Idealfall entspricht es dem Quadrat des Gewichtsvektors.

Als Vorfilterung des Wiedergabesignals kann zum Beispiel eine Differenzierung vorgenommen werden. Da bereits im Kanal in erster Näherung durch Induktion ein differenzierendes Verhalten vorliegt, könnte durch eine weitere Differenzierung eine Phasenlage von -180° zwischen Aufnahme- und Wiedergabsignal erreicht werden und damit eine maximale negative Korrelation.

Die praktische Realisierung eines assoziativen Speichers für das vorliegende Problem erschient zwar sehr interessant, könnte aber an der geforderten hohen Verarbeitungsgeschwindigkeit scheitern, da die "Assoziationen" mit Hilfe vieler Multiplikationen gebildet werden müssen. Ein in analoger Bauweise realisiertes Netz, dessen Gewichte mit dem Backpropagation-Algorithmus auf dem PC optimiert und mit Potentiometern eingestellt werden, ist dagegen sehr schnell und stellt einen geringen Aufwand dar.

EP 0 681 291 A2

**Patentansprüche**

1. Verfahren zum Entzerren von Datensignalen, **dadurch gekennzeichnet,** daß ein neuronales Netzwerk zur Entzerrung verzerrter Datensignale vorgesehen ist.

2. Verfahren nach Anspruch 1, **dadurch gekennzeichnet,** daß das Übertragungsverhalten des neuronalen Netzwerkes anhand einer vorgebbaren Datensequenz erlernt wird.

3. Verfahren nach Anspruch 2, **dadurch gekennzeichnet,** daß beim Lernen des neuronalen Netzwerkes die Lernrate verändert wird.

4. Verfahren nach Anspruch 2 oder 3, **dadurch gekennzeichnet,** daß beim Lernen des neuronalen Netzwerkes die Iterationszahl verändert wird.

5. Verfahren nach Anspruch 2, **dadurch gekennzeichnet,** daß das neuronale Netzwerk mit geringer Iterationszahl aber hoher Lernrate lernt.

6. Verfahren nach Anspruch 2, **dadurch gekennzeichnet,** daß für den Lernvorgang des neuronalen Netzwerkes die Iterationszahl hoch, die Lernrate dagegen klein gewählt ist.

7. Verfahren nach Anspruch 2, **dadurch gekennzeichnet,** daß für den Lernvorgang des neuronalen Netzwerkes sowohl die Iterationszahl als auch die Lernrate gering gewählt sind.

8. Verfahren nach einem oder mehreren der Ansprüche 2 bis 7, **dadurch gekennzeichnet,** daß während des Lernvorgangs des neuronalen Netzwerkes ein Rauschsignal dem neuronalen Netzwerk zugeführt wird, um den Rauschabstand zu verbessern.

9. Verfahren nach Anspruch 1, **dadurch gekennzeichnet,** daß das neuronale Netzwerk als assoziativer Speicher ausgebildet ist, dessen Eingangsgewichtsvektoren aus den Codeworten der Datensignale bestehen, daß die Skalarprodukte der Eingangsgewichtsvektoren mit dem jeweils empfangenen Codewort gebildet werden und daß das größte Skalarprodukt die größte Korrelation angibt.

10. Schaltungsanordnung zur Entzerrung von Datensignalen, **dadurch gekennzeichnet,** daß das zu entzerrende Datensignal (DS) einer Reihenschaltung aus mehreren Verzögerungsgliedern (VZ1,...,VZ5) zugeführt wird, daß das unverzögerte Datensignal (DS) einem Netzwerk zur Gewichtung (NG1) sowie daß das nach jedem Verzögerungsglied (VZ1,...,VZ5) abnehmbare und der Verzögerung des Verzögerungsgliedes entsprechend verzögerte Datensignal (DS1,...,DS4) je einem weiteren Netzwerk zur Gewichtung (NG2,...,NG5) zugeführt wird, daß die Ausgänge der Netzwerke zur Gewichtung (NG1,...,NG4) mit je einem Eingang eines Neurons (N1,...,N5) verbunden sind, daß der Ausgang eines jeden Neurons mit je einem Verstärker (V1,...,V5) zur Gewichtung verbunden ist, und daß die Ausgänge der Verstärker (V1,...,V5) mit den Eingängen eines weiteren Neurons (N6) verbunden sind, an dessen Ausgang das entzerrte Datensignal(DA) abnehmbar ist.

7

Record-Signal

Fig. 1

Playback-Signal

Fig. 2

Fig. 3